# EUROPEAN PATENT APPLICATION

(11) **EP 4 105 631 A1**
(43) Date of publication of application: **21.12.2022**
(21) Application number: 21179216.3
(22) Date of filing: 14.06.2021
(51) Int. Cl.: G01N 1/02, E21C 51/00

(54) **REGOLITH PACKAGING SYSTEM AND CONTAINER WITH LID**

(71) Applicant: The Hong Kong Polytechnic University, Kowloon (HK)
(72) Inventor: YUNG, Kai Leung, Kowloon (HK)
(74) Representative: Purdylucey Intellectual Property

(57) **Abstract**

There is provided a non-terrestrial regolith robotic sample packaging system, and container.

The system has a main housing with an elevation assembly and a cavity for receiving a sample container. The elevation assembly comprises a first motor, an elongate pin, and a driven sleeve. An arm assembly comprises an arm housing with a clutch assembly, and a gear mechanism driven by a second motor. There is also an axle pin which extends from the arm assembly. The system also includes a funnel assembly which has a funnel, and a skirt. A funnel driving gear of the gear mechanism rotates the funnel independently of the skirt.

## Description

### FIELD

The present disclosure relates to a remotely operable packaging system and container with lid for regolith.

### BACKGROUND

The analysis of extra-terrestrial regolith samples provides unique scientific insights into the properties, formation and change in surface environment over time of the various bodies and have transformed understanding of our solar system. (As is known in the art, regolith is the unconsolidated loose heterogeneous superficial deposits covering solid rock).

Various approaches have been employed in sample collection especially in obtaining samples from Earth's nearest neighbour, the Moon. These approaches range from human facilitated retrieval (e.g. Apollo programme retrieving regolith samples from the moon between 1969-1972) to robotic sampling of regolith (e.g. Soviet Luna missions obtaining a hollow tube filled with soil in 1976).

Necessarily, after withstanding vibrations and other mechanical shocks associated with launch, cruising and landing, robotic packaging apparatus must be able to operate reliably under extreme conditions to receive and seal regolith from collection devices. At the same time any packaging apparatus must be as small and lightweight as possible to maximise the potential payload capacity of any sample return mission.

These constraints mean that the development of sample packaging techniques for robotic packaging is uniquely challenging, and the present disclosure teaches a packaging assembly and container which is equipped to address at least some of the deficiencies of prior techniques and provide a useful choice.

### SUMMARY

Features and advantages of the disclosure will be set forth in the description which follows, and in part will be obvious from the description, or can be learned by practice of the herein disclosed principles. The features and advantages of the disclosure can be realized and obtained by means of the instruments and combinations particularly pointed out in the appended claims.

In accordance with a first aspect of the present disclosure, there is provided non-terrestrial regolith robotic sample packaging system.

The non-terrestrial regolith robotic sample packaging system comprises a main housing having an elevation assembly and enclosing a cavity for receiving a sample container therein, wherein said elevation assembly comprises a first motor rotatably coupled to an elongate pin, said elongate pin threadingly engaged with a driven sleeve for changing the height thereof.

An arm assembly is attached to the driven sleeve, the arm assembly comprising an arm housing enclosing a clutch assembly, connected with a gear mechanism driven by a second motor rotatably coupled thereto; and an axle pin engageable with a lid for rotation thereabout. The axle pin is extendable from the arm assembly.

A funnel assembly comprises a funnel and a skirt, wherein a funnel driving gear of the gear mechanism is coupleable via the clutch assembly to the second motor, for rotation of said funnel in a direction of towards and away from the cavity of the main housing independently of the skirt.

The main housing may include a base plate in the cavity having a plurality of teeth extending therefrom for securing a container therein, said teeth being engageable with corresponding apertures located in ribs protruding from the bottom of a sample container to be secured.

Rotation of the elongate pin may displace the driven sleeve away from and in the direction of towards the main housing. The displacement of the driven sleeve may change the clutch assembly between an engaged state and disengaged state.

Optionally, the funnel driving gear is coupled to the second motor when the clutch assembly is engaged.

At least one gear of the gear mechanism may project externally of the arm housing so as to be engageable with a corresponding circumferential geared portion of a lid of the sample container.

Optionally, actuation of the second motor rotates the lid of the sample container into engagement with the container via the least one gear of the gear mechanism projecting externally of the arm housing engaging with the circumferential geared portion of the lid of the sample container. The rotation of the sample lid urges a projecting finger on a rim of the container into engagement with one or more corresponding locking lugs of the lid.

Optionally, the lid of the sample container may be releasably attached with the arm assembly may have a central aperture for receiving the axle pin of the arm assembly.

Optionally, the packaging system may further comprise resiliently deformable projections extending into the cavity.

Optionally, the packaging system may further comprise a sealing gasket for sealing engagement of a lid with the sample container.

Optionally, the packaging system may further comprise an inclined surface on the container body disposed for sealing engagement with the lid upon relative rotation thereof.

In accordance with a second aspect of the present disclosure, there is provided a sample container and lid for receiving and sealing sample regolith for use with the robotic packaging system of the first aspect of the present disclosure. The sample container comprises a container body having a sample receiving cavity, and a base with protruding ribs having apertures defined therein, wherein said apertures are configured for receiving corresponding projections of a housing of the robotic packaging system receiving the container. Arotatable lid is provided with at least a partial circumferential geared portion engageable with a corresponding gear of the robotic packaging system; and a central hole engageable with a corresponding axle pin of the robotic packaging system, wherein the lid is configured so as to be rotatable via the at least partial circumferential geared portion about the axle pin into sealing engagement with the container body.

Optionally, the sample container and lid are configured such that further rotation of the lid about the axle pin of the robotic packaging system disengages the apertures from the corresponding projections. Rotation of the sample lid may urge a projecting finger on a rim of the container into engagement with one or more corresponding locking lugs of the lid for sealing engagement of the container with the lid.

### BRIEF DESCRIPTION OF THE DRAWINGS

In order to describe the manner in which the above-recited and other advantages and features of the disclosure can be obtained, a more particular description of the principles briefly described above will be rendered by reference to specific embodiments thereof which are illustrated in the appended Figures. Understanding that these Figures depict only exemplary embodiments of the disclosure and are not therefore to be considered to be limiting of its scope, the principles herein are described and explained with additional specificity and detail through the use of the accompanying Figures.

Preferred embodiments of the present disclosure will be explained in further detail below by way of examples and with reference to the accompanying Figures, in which:-
FIG. 1A depicts a perspective view of an embodiment of the robotic packaging system of the present disclosure; in which the funnel assembly and lid are away from the opening of the housing, and in which the container has been removed.
FIG. 1B depicts the perspective view of the robotic packaging system of FIG. 1A in which an exemplary container is retained within the housing.
FIG. 1C depicts an exploded perspective view of the robotic packaging system of FIG 1B.
FIG. 2A depicts an exploded perspective view of an exemplary container and lid separated but in position for engagement.
FIG. 2B depicts a perspective view of an exemplary sample container with the lid which is received in the robotic packaging system of FIG. 1A.
FIG. 2C depicts an underplan perspective view of the sample container of FIG. 2A.
FIG. 2D depicts an exploded perspective view of the bottom the sample container and an exemplary base of the housing of the robotic packaging system.
FIG. 2E depicts a cross sectional view of the bottom of the sample container and base of FIG. 2C when engaged together.
FIG. 2F depicts a top perspective view of the lid of the exemplary sample container of FIG. 2A engaged with a gear of the arm.
FIG. 2G depicts an underplan view of the lid of the exemplary sample container of FIG. 2A.
FIG. 3A depicts an exemplary perspective view of the arm member of the robotic packaging system of FIG. 1A, showing the funnel assembly and attached lid.
FIG. 3B depicts an exemplary exploded view of the main components of the arm member of FIG. 3A.
FIG. 3C depicts an exemplary cross section view of the main components of the arm member of FIG. 3A.
FIG. 3D depicts an enlarged cross-sectional view of the main components of the arm of FIG. 3A.
FIG. 3E depicts a perspective view of an embodiment of an exemplary dog clutch mechanism in a disengaged state.
FIG. 3F depicts a perspective view of an embodiment of an exemplary dog clutch mechanism in an engaged state.
FIG. 3G depicts an enlarged cross section which shows the first motor and gears in locked position in the elevation assembly in the launch state.
FIG. 3H depicts an enlarged cross section which shows the first motor and gears in unlocked position in the elevation assembly as the system unlocks from the launch state.
FIG. 4A is a high level flowchart of the operational states of the robotic packaging system of FIG. 1A.
FIG. 4B is a flowchart of the receiving regolith sample step of FIG. 4A.
FIG. 4C is a flowchart of the clearance of excess regolith sample step of FIG. 4A.
FIG. 4D is a flowchart of the sealing of the container step of FIG. 4A.
FIG 4E is a flowchart of the disengagement steps of FIG 4A.
FIG. 5A depicts an exemplary perspective view of the robotic packaging system of FIG. 1A in the launch state.
FIG. 5B depicts an exemplary perspective view of the robotic packaging system of FIG. 1A when the lid is ready to be removed from the container.
FIG. 5C depicts an exemplary perspective view of the robotic packaging system of FIG. 1A as the funnel assembly is positioned over the open container and after the lid has been removed.
FIG. 5D depicts an exemplary perspective view of the robotic packaging system of FIG. 5A after receiving excess regolith sample.
FIG. 5E depicts an exemplary perspective view of the robotic packaging system of FIG. 5A when the funnel portion of the funnel assembly has swept out to remove some excess regolith.
FIG. 5F depicts an exemplary perspective view of the robotic packaging system of FIG. 5A after the funnel portion of the funnel assembly has swept across and back to re-join the funnel assembly after removal of excess regolith sample.
FIG. 5G depicts an exemplary perspective view of the robotic packaging system of FIG. 5A when the funnel assembly moves up and away from the open container.
FIG. 6A depicts an exemplary view of the robotic packaging system of FIG. 5A when the lid is moved into a position above the open container.
FIG. 6B depicts an exemplary cross sectional view of the robotic packaging system of FIG. 5A when the lid is moved onto the container and is about to be engaged with the container.
FIG. 6C depicts an exemplary cross sectional view of a portion of the robotic packaging system of FIG. 5A when the lid is on the container which is disengaged with the base of the housing.
FIG. 6D depicts an exemplary cross sectional view of a portion of the robotic packaging system of FIG. 4A when the gear of the arm drives the lid into engagement with the container.
FIG. 7A depicts an exemplary partial cross sectional view of container and lid in a sealed state with an optional sealing gasket.
FIG. 7B depicts an exemplary perspective view of the sealing gasket of FIG. 7A.
FIG. 7C depicts an exemplary cross sectional view of the sealing gasket of FIG. 7A.
FIG. 8A depicts an exemplary perspective view of the sealing assembly after the filled container has been sealed and the funnel assembly is moved out away from the lid.
FIG. 8B depicts an exemplary perspective view of the sealing assembly after the filled container has been sealed, the arm and attached funnel assembly have been moved away and the container is ready for extraction from the housing.

### DETAILED DESCRIPTION OF THE PREFERRED EMBODIMENTS

Various embodiments of the disclosure are discussed in detail below. While specific implementations are discussed, it should be understood that this is done for illustration purposes only. A person skilled in the relevant art will recognize that other components and configurations may be used without parting from the spirit and scope of the disclosure.

The disclosed technology addresses the need in the art for remotely operable robotic packaging system and container disengageable from a housing, able to reliably receive and clear excess regolith therefrom and to ensure an effective seal when filled for return back to Earth.

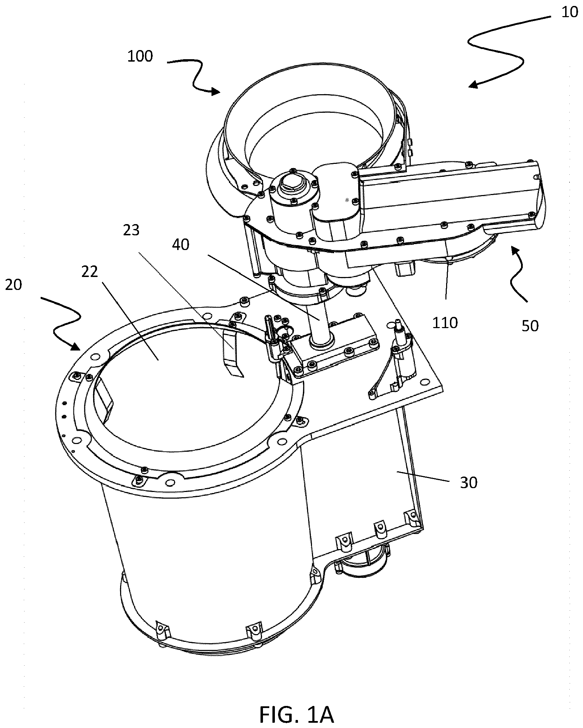

Referring to FIG. 1A, there is depicted an exemplary perspective view of an embodiment of the robotic sample packaging system **10** of the present disclosure.

The main housing **20** includes a cavity **22** in which resiliently deformable projections **23** extend into the cavity. In the embodiment shown, these projections **23** are leaf springs, although similarly deformable projections could also be used.

The main housing **20** also includes an elevation assembly **30** which is connected via a connecting rod **40** to an arm assembly **50.** The arm assembly **50** includes a lid retention member **110** connected thereto, as well as a funnel assembly **100.** Additional components of the robotic packaging system **10** will be described herein in further detail below.

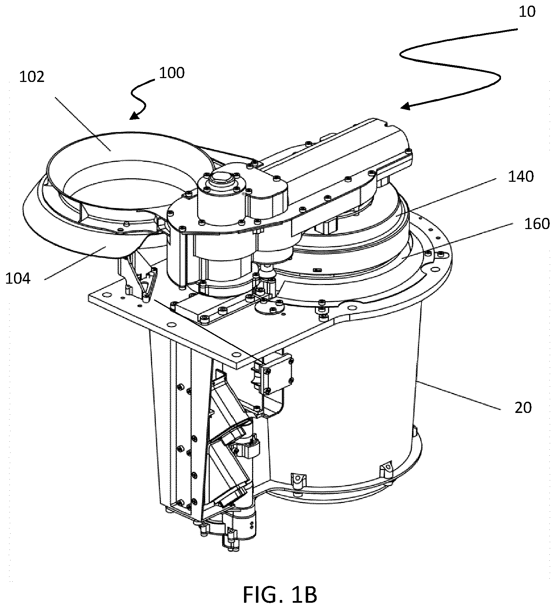

Referring now to FIG. 1B, there is depicted an alternate view of the robotic packaging system **10** of the present disclosure, in which a container **160** and lid **140** have been received in the cavity **22** of the main housing **20.** In the arrangement depicted the funnel assembly **100** is oriented to project away from above the cavity **22** off to the side.

The container **160** is securely retained in the housing **20** by the action of the resilient projections **23** in the cavity, as well as downward pressure provided by the arm assembly **50** via the lid retention member **110.** As will be described herein, the bottom of the container **160** (not visible) is also engaged with the main housing **20.** This configuration is an example of a launch configuration in which the container **160** is securely retained to ensure that the mechanism is not damaged during launch, flight, and landing via vibrations or other mechanical shocks.

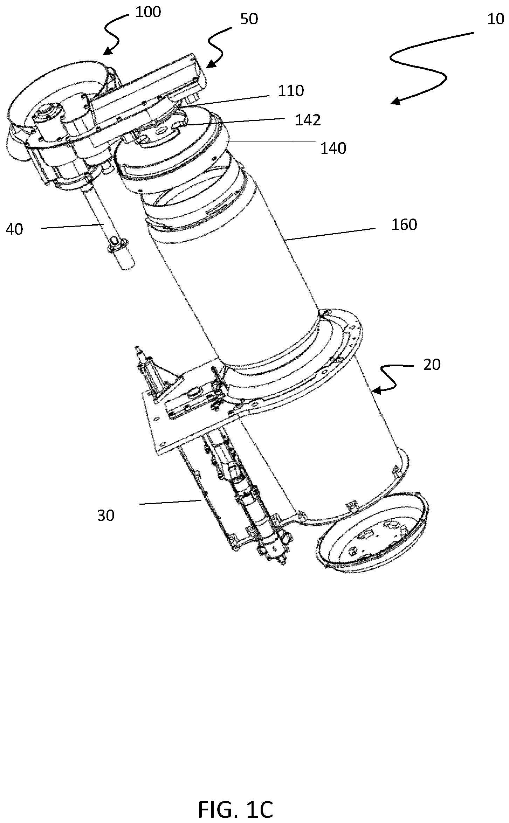

FIG. 1C depicts an exploded perspective view of the robotic packaging system **10** of FIG 1B.

As depicted, the base plate **24** of the main housing **20** is located next to the elevation mechanism **30.** The connection rod **40** attaches the arm assembly **50** to the driven sleeve (not shown). The container **160** is received in the main housing **20.** The lid **140** is attachable to the arm assembly **50** via the gripping portion **142** which engages with the lid retention member **110.**

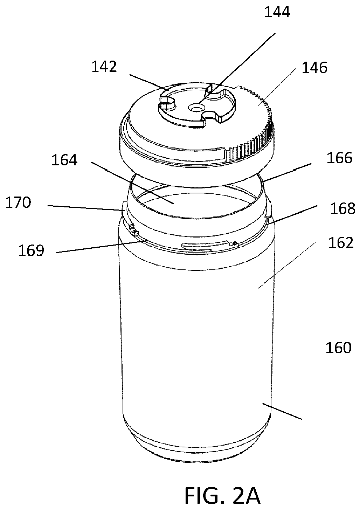

Referring now to FIGS. 2A to 2G, there is depicted an exemplary container **160,** which is received in the cavity **22** of the main housing **20.**

In the open configuration depicted in FIG. 2A, it can be seen that the lid **140** is spaced apart from the cavity **164** of the container and aligned for engagement with the container. The container **160** has a container body **162** which defines a cavity **164** which receives the sample.

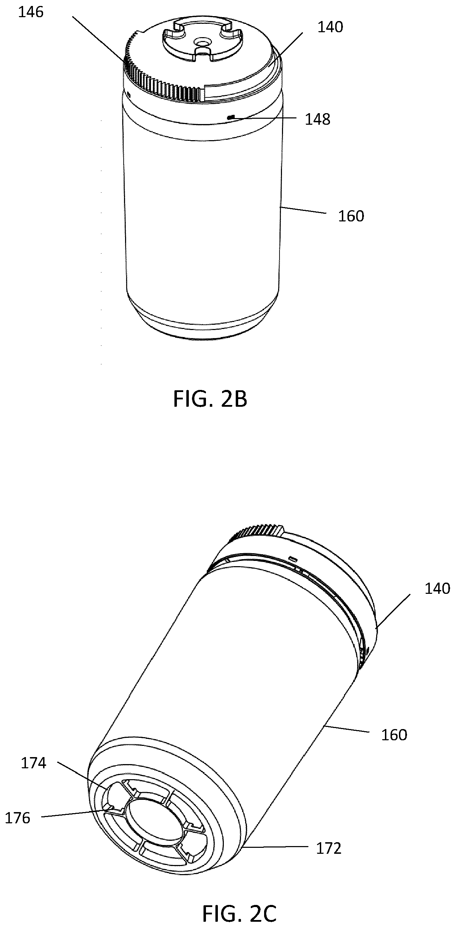

As can be seen in FIG. 2B, the lid **140** is engaged with the container **160** and may be further locked with the container as discussed herein.

As depicted in both FIGS. 2A and 2B, the lid **140** has a gripping portion **142** which is engageable with the lid retention member **110** of the arm assembly **50,** and eventually with a robotic extraction arm (not shown).

In the centre of the lid, there is a central hole or aperture **144** which is configured to receive an actuable axle pin **120** of the arm assembly. In addition, a toothed circumferential portion **146** of the lid **140** is engageable with an external lid driving gear **70** of the arm assembly **50.**

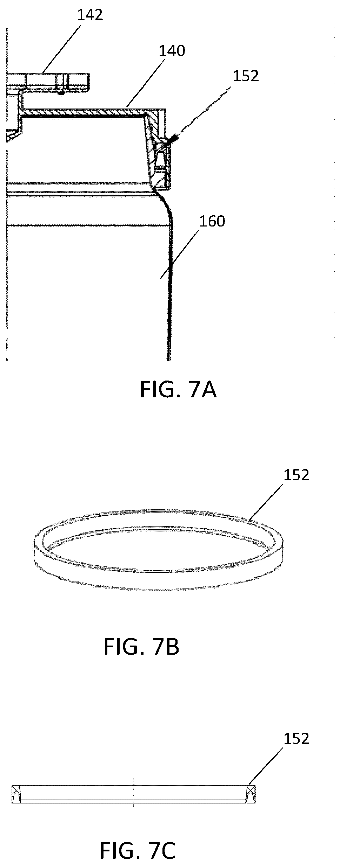

The upper rim **166** of the container **140** is a tapered frusto-conical section which tapers inwardly and is shaped and dimensioned so as to engage with a surface in the circumferential rim of the lid **140.** As shown in FIGS. 7A-C, an optional sealing gasket **152** may also be included to facilitate a tight sealing engagement between the lid **140** and the container **160.**

To ensure that the lid is tightly sealed with the container for the voyage back to Earth and to avoid contamination of any sample that is collected, a lower rim **168** of the container **160** includes projecting fingers **170.** These projecting fingers **170** are configured to engage over the top of complementary locking lugs **150** (not shown).

As can be seen with particular reference to FIG. 2B, release apertures **148** are also provided, these being able to be actuated upon return of the sealed container to earth by an unlocking pin or similar. These apertures may be used to drive the fingers **170** out of engagement with the locking lugs **150** of the lid **140** for retrieval of the sample from the container **160** on the return to Earth.

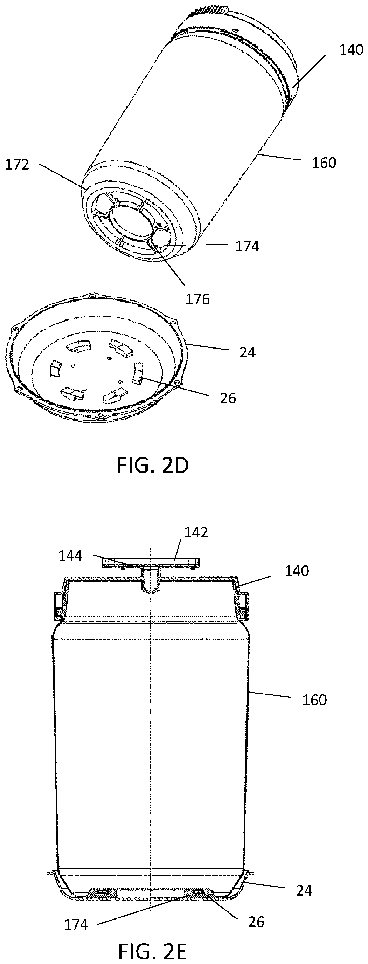

Referring now to FIGS. 2C and 2D, the bottom **172** of the container **160** is engageable with the base plate **24** in the cavity of the main housing **20.** (As would be apparent to persons skilled in the art, if the lid is also attached to the container, the container and lid will together be retained in the main housing).

The container bottom **172** includes a plurality of ribs **174** having apertures **176** formed therein.

The apertures **176** are dimensioned so as to receive projecting teeth **26** which extend from the base plate **24** depicted in FIG. 2D. Rotation of the container (driven by the external lid driving gear **70** acting on the circumferential tooth portion **146** of the lid **140)** drives the container **160** and lid **140** into engagement with the housing **20,** by the interaction of the base plate locking teeth **26** and the apertures **176,** as described herein.

Referring now to FIG. 2E, there is depicted a cross-sectional view of the lid **140** when attached to the container **160.** The gripping portion **142** and the central hole **144** for receiving an axle pin **120** of the arm assembly can also be seen.

At the base of the container **160,** the base plate **24** of the housing **20** can be seen engaged via locking teeth **26** which insert into apertures **176** of the ribs **174** at the bottom **172** of the container **160.**

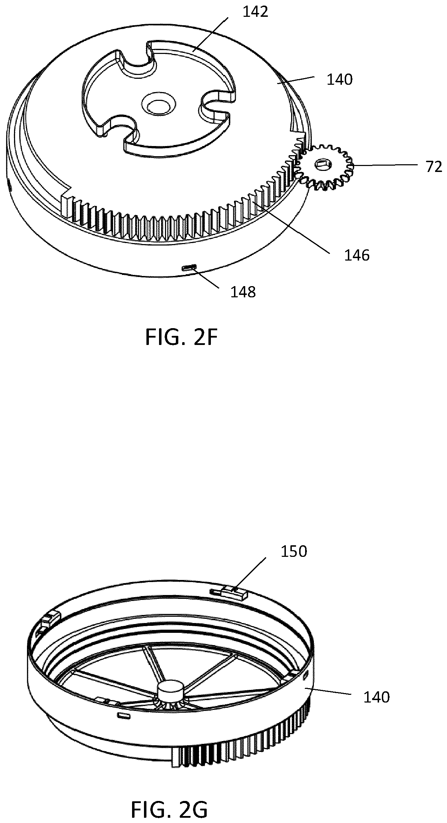

Referring now to FIG. 2F, there is depicted a top perspective view of the lid **140** engaged with an external gear **72** of the arm assembly (not shown).

The lid **140** includes a gripping portion **142** and circumferential toothed portion **146.** A release aperture **148** is also visible.

FIG. 2G is an underplan view of the lid **140** in which the locking lugs **150** are visible. It can be seen that these locking lugs are received under the projecting fingers **170** on the rim of the container to lock the lid **140** with and to the container **160.**

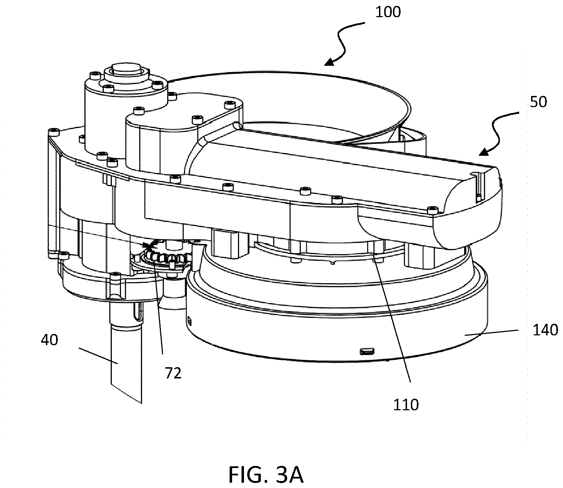

Referring now FIG. 3A, there is depicted an exemplary perspective view of the arm assembly **50** showing the funnel assembly **100** with the lid **140** engaged via a lid retention member **110** with the gripping portion **142** of the lid.

The external lid driving gear **70** of the gear mechanism **62** is also visible in a position where this gear is engageable with the circumferential toothed portion **146** (not visible) of the lid **140** as disclosed herein.

A connecting rod **40** is also visible.

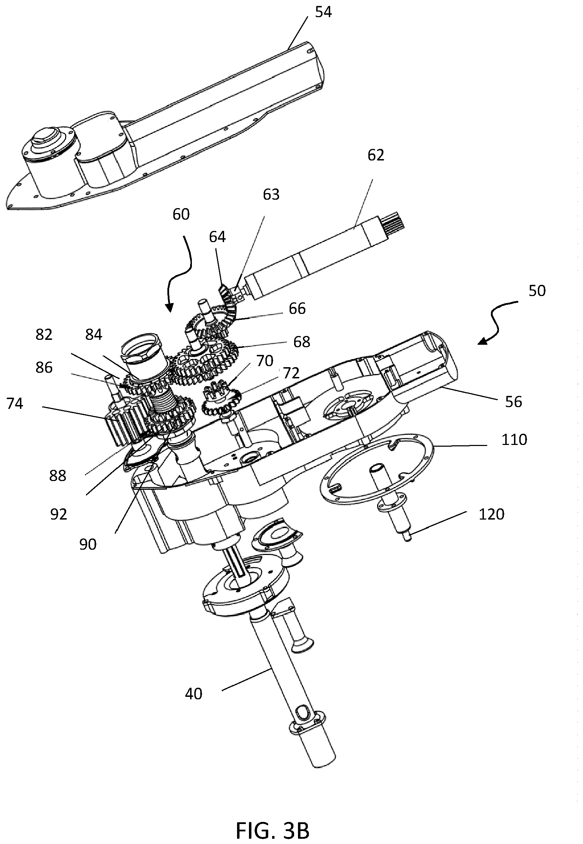

Referring now FIG. 3B, there is an exemplary exploded view of the main components of the arm assembly **50.** The funnel assembly **100** and lid **140** have been removed/ are not attached respectively for clarity purposes.

As depicted, the arm assembly **50** comprises an upper housing **54** and a lower housing **56** which together define a space for receiving a gear mechanism **60,** and a second motor **62.** The gear mechanism **60** is connected via a connection rod **40** with a driven sleeve **36** (not shown) of the elevation assembly **30.**

The second motor **62** has a shaft **63** on which a bevelled gear **64** is attached so as to drive the gear mechanism **60.** This bevelled gear **64** in turn drives the gear mechanism **60** via a further gear **66** which in turn drives another gear **68.** Gear **68** drives the first gear **84** of the upper clutch **82.**

In the disengaged state shown, the upper clutch plate **86** of the upper clutch **82** is disengaged and spaced apart from the lower clutch plate **92** of the lower clutch **88.** (In an engaged state the upper clutch plate **86** couples with the lower clutch plate **92** with mating engagement between the respective teeth, and engagement of the upper 'dog' clutch **82** with the lower 'dog' clutch in a manner familiar to those skilled in the art). The upper and lower clutches **82, 88** are biased apart (e.g. by a spring mechanism) with this separating force overcome by the first motor urging the driven sleeve which in turn urges the upper clutch **82** to descend into engagement with the lower clutch **88.**

In the disengaged arrangement depicted, the actuation of the second motor **62** does not drive the funnel driving gear **74.** In an engaged arrangement (not shown) actuation of second motor is able via the gear mechanism **60** to drive the funnel driving gear **74** to independently rotate out the funnel **102** away from the skirt **104** of the funnel assembly **100.**

Also depicted in FIG. 3B is an external lid driving gear **72** which is engageable with a lid **140** (not shown).

Distal of the gear mechanism **60,** an axle pin **120** is actuable so as to extend into the central hole **144** of the lid (not shown). The lid retention member **110** is sized and configured so as to engage with the top gripping portion of the lid **142.**

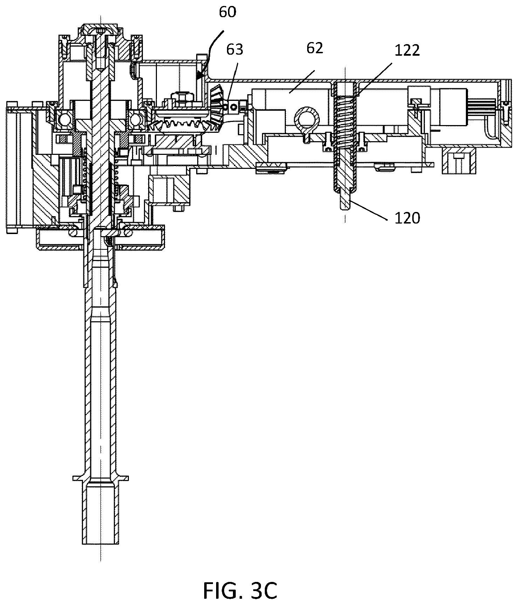

Referring now to FIG. 3C, there is depicted a cross-sectional view of the arm assembly **50.** Of particular note are the axle pin **120** and a biasing means **122** which is used to drive the axle pin **120** at the appropriate time external of the arm assembly **50** so as to project into the central hole of the lid **144** (not shown).

Also depicted is the second motor **62,** and the shaft of the second motor **63** which is coupled to the gear mechanism **60.**

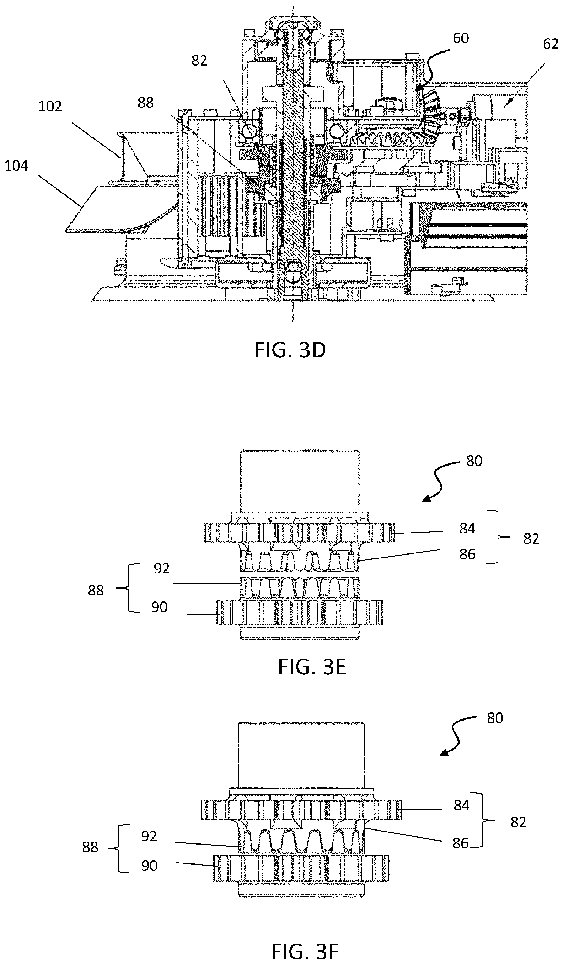

Referring now to FIG. 3D, the more significant components are identified. As depicted, the arm assembly **50** includes a second motor **62** which is coupled to a gear mechanism **60** and a clutch assembly **80.** The clutch assembly **80** comprises an upper clutch **82** which is engaged with lower clutch **88** in the state depicted. A portion of the funnel **102** and skirt **104** is also visible.

Referring now to FIGS. 3E and 3F, there is depicted an exemplary clutch assembly **80** shown in a disengaged state (FIG. 3E) and engaged state (FIG. 3F).

As depicted, the clutch assembly **80** comprises an upper clutch **82** including an upper clutch plate **86** and a first gear **84** and a lower gear **88** comprising a lower clutch plate **92** and a lower gear **90.** As is well known in the art, as the upper clutch plate and lower clutch plate are bought into engagement, rotational coupling between the upper clutch and the lower clutch can be achieved. In this way, the plurality of levels of the arm assembly can provide for various states of the system.

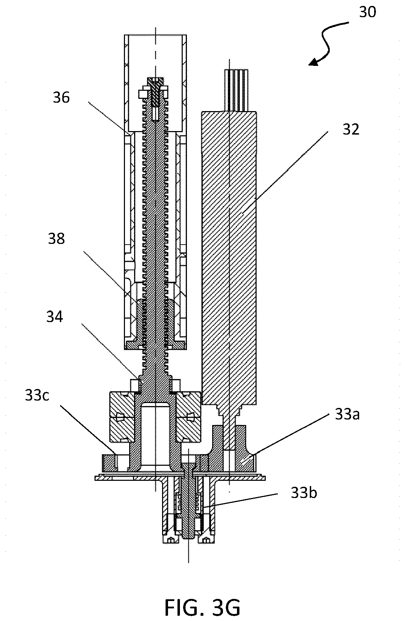

Referring now to FIG. 3G there is depicted a cross-sectional view of the first motor **32** which is engaged with a first motor pinion gear **33a.** This first motor pinion gear **33a** is initially driven by the first motor to release the launch lock pin **33b;** by driving the lead screw gear **33c** after the robotic packaging system **10** lands at the remote location.

The unlocking of the launch lock pin **33b** is part of the transition of the system **10** from the launch state. It would be appreciated that retaining the components in a locked state is important to protect the elevation mechanism from mechanical shocks experienced during the flight from Earth and landing at the remote location.

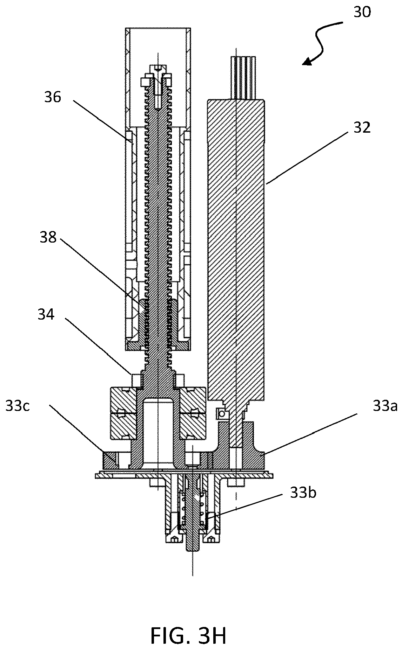

After the launch lock pin is released, as depicted in FIG. 3H, the first motor is rotatably coupled to drive the driven sleeve **36** of the elevation assembly **30,** which is attached to the main housing **20** (not shown).

As depicted in FIG. 3H, the first motor is now rotatably coupled to the elongate pin **34** such that which is fixed to the main housing **20.** As such, rotation of the first motor is in turn transformed into rotation of the elongate pin, which engages with the threaded portion of the driven sleeve 38 to urge it upwards or downwards depending on the direction of rotation of the first motor **32.**

Actuation of the elevation assembly **30,** specifically the first motor **32** is therefore responsible for changing the height of the connecting rod **40** and the clutch assembly **80** which in turn provides for selection of various states of the robotic packaging system **10.**

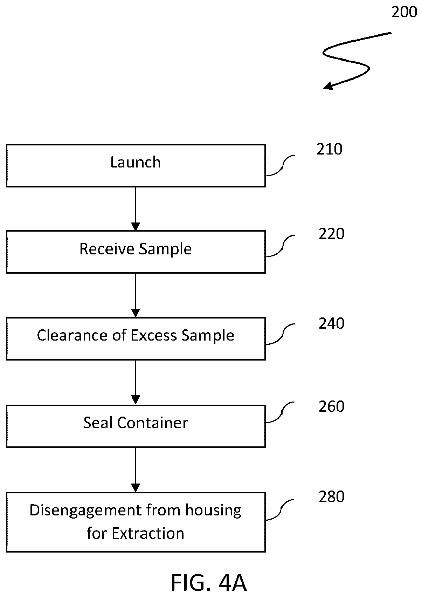

Referring now FIG. 4A, there is depicted in overview some various operational states of the robotic packaging system **10** of the present disclosure. As depicted, the robotic packaging system changes operational states from the launch state **210,** to the receiving sample state **220,** to the clearance of the excess sample **240,** to the sealing of the container **260** and finally in a state ready for disengagement of the sample container from the housing for extraction **280.**

The transition between these states is managed, remotely, by activation of the various components of the packaging assembly **10** as described herein.

It would be appreciated that the system transitions between the respective operational states must be effective and reliable as there is no opportunity to take corrective action as the packaging system is not able to be reached as it is in outer space. Failure of anyone of these operational states will mean that the mission of obtaining sample regolith will be unsuccessful.

Accordingly, the transitions between the operational states as described herein are designed to be extremely reliable.

In the launch state **210,** the system **10** is configured to resist mechanical vibration and shocks. In addition, the retention of the container and lid in the housing as described below is also configured to resist the vibration and mechanical forces which are associated with launch from Earth, and landing on the distant planet or moon surface.

The first motor **32** is disengaged from the elevation assembly **30** as described with reference to launch locking pin **33b** as described above and depicted in FIG. 3G.

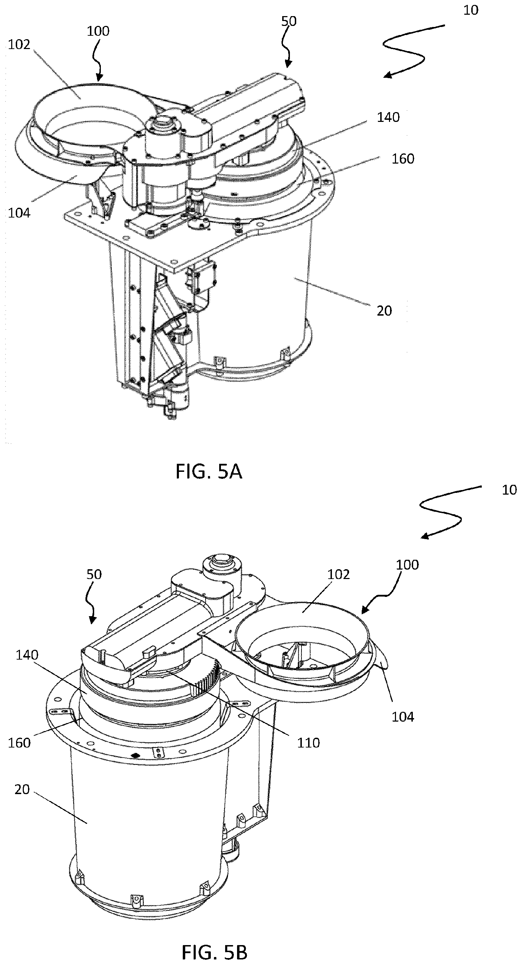

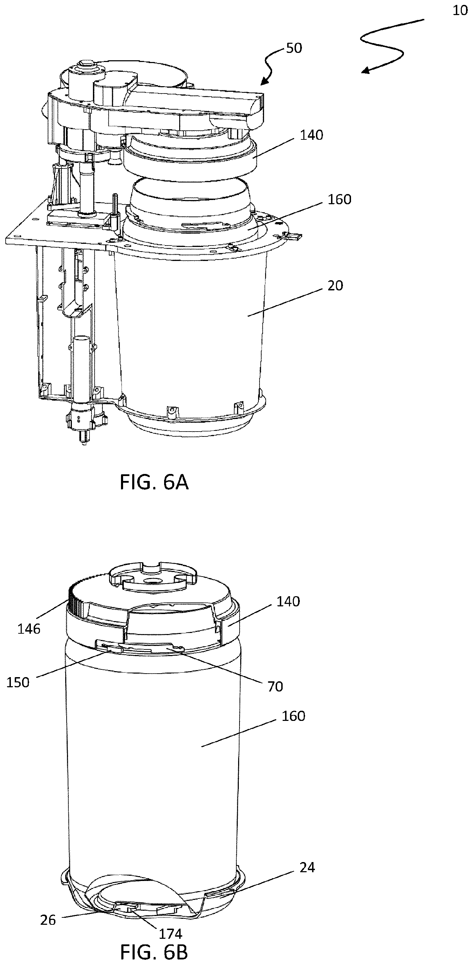

The lid **140** is loosely retained on the container **160** by the downward pressure of the lid retention member **110** pushing against the lid **140** as shown and described with reference to FIG. 5A, FIG. 6B. It is important to note that at this point the lid is not locked with the container **160.**

The container **160** is retained in the main housing **20** via engagement of the teeth **26** of the base plate **24** with apertures **176** at the bottom of the container **160** as shown and described with reference to FIG. 6B.

Resiliently deformable projections (leaf springs) **23** also restrain the side of the container **160** in the cavity **22** of the main housing **20,** depicted in FIG. 1A.

Furthermore, in this launch state the clutch assembly **80** is disengaged and the first motor **32** and second motor **62** are de-energized to avoid damage.

Once the space flight has reached the surface of the moon or planet from which the regolith sample is to be obtained, the robotic packaging mechanism **10** of the present disclosure needs to transition from the launch state to receive regolith, seal and then disengage the sample container **160** from the main housing **20.**

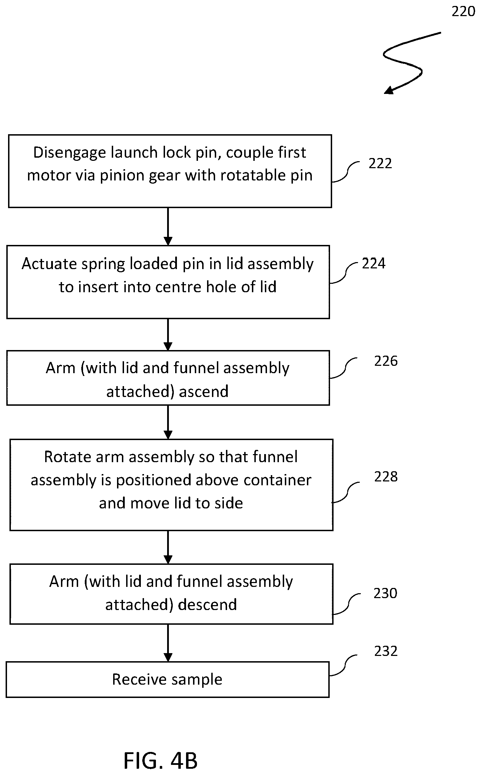

Referring now to FIG. 4B, once the packaging assembly **10** reaches the destination (the surface of the moon or planet from which the regolith sample is to be obtained) the system needs to transition from launch state to a state where it is ready to receive regolith sample, as outlined in the operational states grouped together as Item **220** (FIG. 4A) and explained in more detail with reference to FIG. 4B.

As described above with reference to FIGS. 3G, 3H in step **222** of FIG. 4B, the launch lock pin **33b** is disengaged by actuation of the first motor to release the launch lock pin **33b;** by driving the lead screw gear **33c** so that the first motor is rotatably coupled to the driven sleeve **36** of the elevation assembly **30,** which is attached to the main housing **20** (not shown).

As indicated in step **224** of FIG. 4B, the axle pin **120,** is actuated so that it projects outward from the arm assembly **50** and pushes against and into the central hole **144** of the lid **140.**

At step **226,** the first motor **32** is then actuated so that the arm ascends to a predetermined height (upwards relative to the initial height of the arm assembly **50** in the launch state at step **224).** The lid **140** is carried up on the arm, at this point over the container **160,** although separated from the container.

At step **228** the second motor **62** is actuated to drive the gear mechanism **60** to rotate the arm assembly **50** and the attached lid **140** to the side. This actuation of the second motor **62** rotates the arm assembly (and attached funnel assembly **100** and retained lid **140)** around the upper clutch **82.**

At step **230** the first motor **32** is then actuated such that the arm (and funnel assembly in positioned over the cavity of the container) descend so that the funnel assembly is positioned slightly above the container.

The sample is then delivered into the body of the container **160** by a scoop or claw in step **232.**

This externally observable positions for various components of the system in some of these steps of transitioning from launch state to actually receiving sample can be seen with reference to the actual positions of the arm and container in FIGS. 5A-5D.

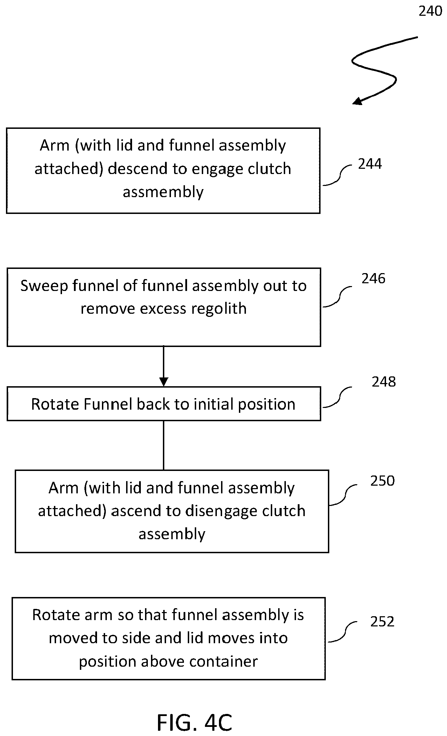

Referring now to FIG. 4C the excess sample is cleared from the container in the clearance of excess sample step **240.**

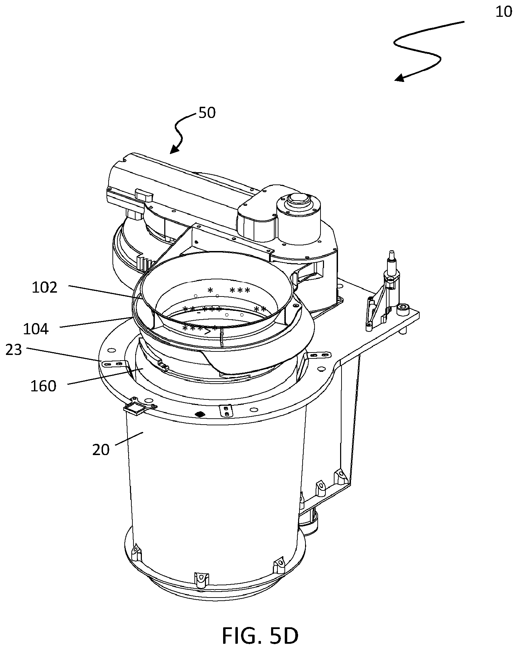

When the regolith is introduced into the container **160,** typically excess regolith will be included. This excess regolith will be heaped up and overflowing the container **160** and will prevent effective sealing as depicted in FIG. 5D.

Accordingly, as set out in FIG. 4C, at step **244** first motor **32** is actuated to drive the arm assembly **50** to descend to a predetermined level, thereby lowering the funnel assembly **100** further onto the top of the container **160.**

In this position, the clutch assembly **80** is engaged, such that the upper clutch **82** is engaged with the lower clutch **88.**

At step **246,** the second motor **62** is then actuated to rotate the funnel **102** of the funnel assembly **100** away from the container **160** via the engaged clutch assembly **80** driving the funnel driving gear **74.**

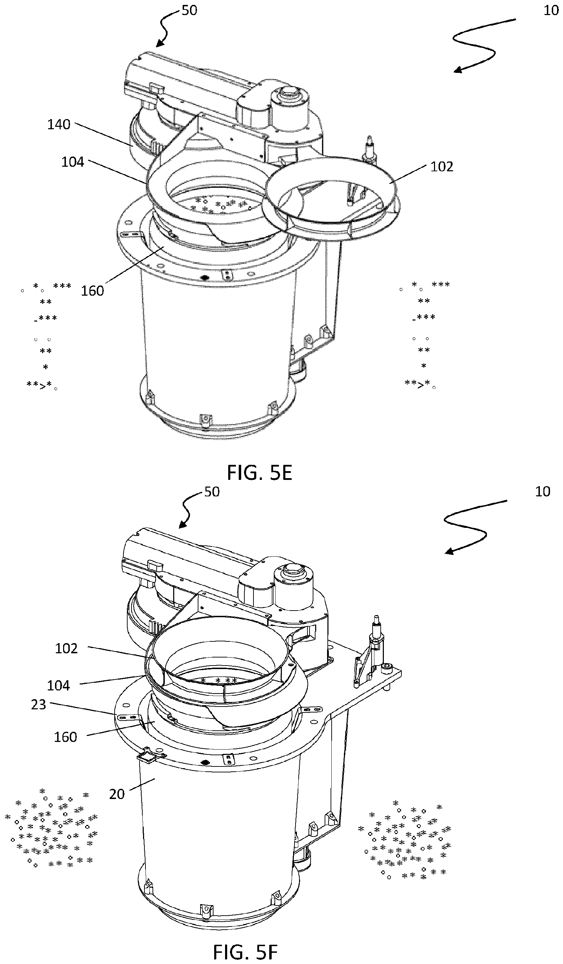

In this outward sweeping movement as the funnel 102 rotates away from the arm assembly **50,** excess regolith is displaced from the top of the container **160.** The skirt **104** remains behind on top of the container **160.** This can be seen with reference to FIG. 5E.

After a predetermined arc, the funnel returns back over the top of the container **160** to re-join the skirt **104** as shown in FIG. 5F in step **248** by reversing the direction of the second motor **62.**

At step **250,** the first motor **32** is actuated to drive the elongate pin in the driven shaft to drive the arm assembly **50** to ascend, which has the effect of disengaging the clutch assembly **80.** (It would be appreciated that this means the funnel driving gear **74** is no longer driven when the second motor **62** is actuated.)

At step 252 the arm assembly **50** is rotated by actuation of the second motor **62** operating via the gear mechanism **60,** to rotate the arm assembly **50** so that it rotates the funnel assembly **100** out from over the container **160** and rotate the lid **140** in so that it is positioned over the container **160** although it is separated vertically from the container **160.** This state is depicted in FIG. 6A.

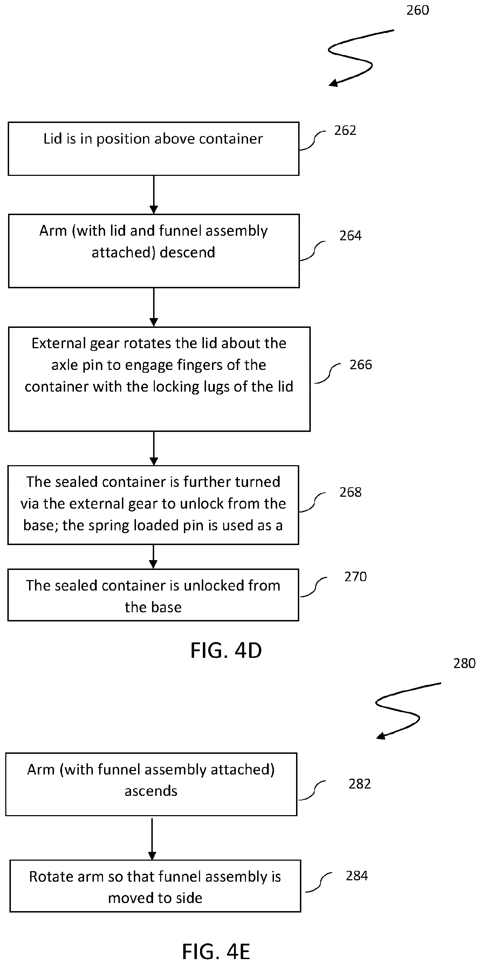

Referring now to FIG. 4D, the lid **140** starts in position ready for sealing with the container **160,** albeit separated vertically from the container **160,** and the process of sealing (step **260** in FIG. 4A) commences. This state is also marked as step **262** in FIG. 4D.

Actuation of the first motor **32** then drives the arm assembly **50** (with attached lid **140** and funnel assembly **100)** to descend to rest on the container **160** in step **264.**

An externally interfacing gear of the gear mechanism **60** is then actuated by the second motor **62** in step **266.**

Specifically, the external driving gear **72** is rotated and engages with a circumferential toothed portion **146** of the lid **140.** Actuation of the second motor **62** then drives the lid **140** to rotate about the axle pin **120** which is received in the central hole **144** of the lid **140** thereby rotating the lid **140** into locking engagement with the container **160.**

In particular, the inclined rim surface **169** on the lower rim **168** of the container **160** has a finger **170** which is brought to project over the lid locking lug **150.** As discussed herein, an optional sealing gasket **152** may be also used with this seal. The outcome of step **266** is that the lid is sealed with the regolith sample in the cavity of the container **160.**

Once the lid **140** is locked with the container **160,** the continued rotation of the second motor **62** drives the container and lid as an integral unit to unlock the apertures **176** in the ribs **174** of the container bottom **172** from the projecting base plate locking teeth **26.**

Accordingly, the rotation of the second motor **62** then drives the unlocking of the container **160** and attached lid **140** from the main housing **20** until it is unlocked in step **270.**

At this point, the container **160** containing the regolith sample may be removed from the main housing **20** by a robotic arm or similar which is engaged with the top gripping portion **142** on the lid.

Thereafter, the sample container **160** can be conveyed back to the return space vehicle for further packaging (if required). The sample can then be carried for the journey back to earth for further analysis.

This process of sealing of the lid onto the container **160** and disengagement from the main housing **20** may be seen with reference to the FIGS. 6B to 6D.

Referring now to FIG. 4E, the arm assembly **50** ascends and is rotated out of the way of the retrieval arm.

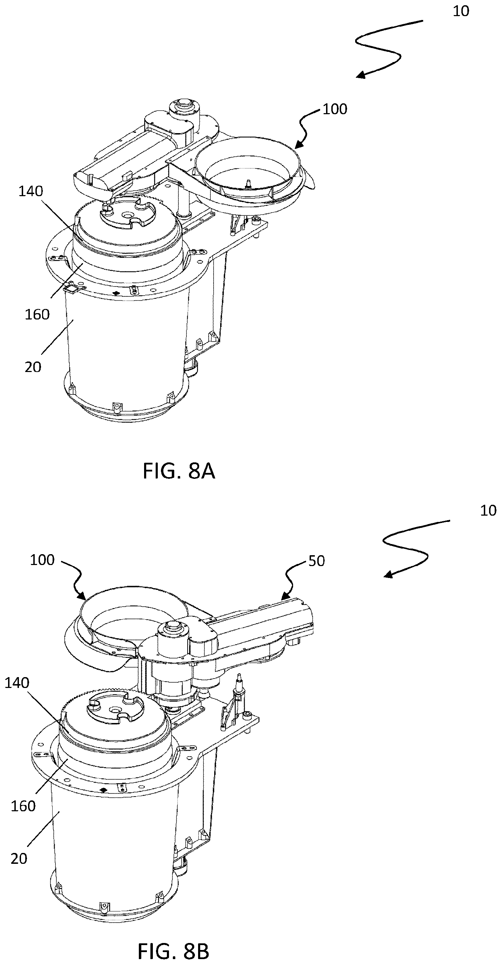

At step **282** of the arm assembly **50** (and attached funnel assembly **100)** ascends, driven by actuation of the first motor **32** rotating the elongate pin **34** and the driven sleeve to elevate the arm assembly **50** up and away from main housing **20.** This can be seen with reference to the starting position of the arm assembly **50** depicted in FIG. 8A.

The second motor **62** is then actuated to rotate the arm assembly **50** further away and provide for clear operation of the extraction robot arm in step **284.** At this point, the container **160** is sealed, disengaged from the housing and ready for collection. This can be seen with reference to the position of the arm assembly **50** depicted in FIG. 8B.

Once the sealed container has been safely retrieved on Earth, the lid locking lugs **150** can be disengaged from the finger **170** by using the release aperture **152** included on the lid **140.**

In particular, it is anticipated that a pin or other rod may be inserted into releasing aperture **152** to drive the finger **170** out from engagement with the lid locking lug **150.**

The various operational states described above are now described with reference to the major components in FIGS. 5A- 5F, FIGS. 6A- 6E, FIGS. 7A- 7C and 8A-8B.

Referring now to FIG. 5A, there is depicted the robotic packaging system **10** of the present disclosure in a launch configuration.

As depicted, the main housing **20,** contains a container **160,** to which a lid **140** is attached (but not locked). As described previously, the container **160** is retained within the cavity **22** of the main housing **20** by resiliently deformable projections **22** (not shown). The lid **140** is also urged against the container **160** by the arm assembly **50** and the funnel assembly **100** comprising the funnel **102** and skirt **104** extends from the side.

Once the spacecraft has landed on the remote planet or moon, the robotic packaging system **10** changes operational state to enable the lid to be removed, and assumes the configuration depicted in FIG. 5B. The launch locking pin is also disengaged as previously described with reference to FIG. 3G and FIG. 3H.

In particular as shown in FIG. 5B, the arm assembly **50** is driven upwards by the first motor, while the lid retention member **110** remains engaged with the lid **140** and the container **160** is received in the cavity **22** of the main housing **20.** As depicted, the funnel assembly **100** comprising the funnel **102** and the skirt **104** are off to the side of the housing, and away from the container **160.**

The second motor **62** is then actuated to rotate the arm assembly (and attached lid **140)** so that the funnel assembly **100** comprising the funnel **102** and the skirt **104** is positioned over the container **160.** This transition state is not depicted in the Figures.

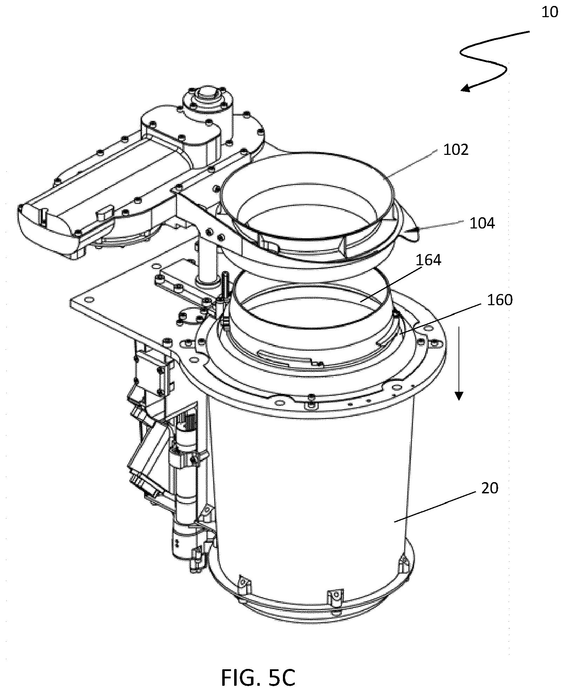

Referring now to FIG. 5C, there is a perspective view depicting the robotic packaging system **10** of the present disclosure in which the arm has been rotated with the lid **140** and the funnel assembly **100** away from the launch position, such that the funnel assembly is positioned over the container **160** (but vertically separated from the container) in preparation for being able to receive sample in the cavity **164** of the container **160.**

This represents an intermediate transitional level of the funnel assembly relative to the container.

The arm assembly (with attached lid 140 and funnel assembly **100)** descends toward the container by actuation of the first motor **32** driving the elongate pin **34** in the driven sleeve **36,** as depicted in FIG. 5C.

Following the configuration depicted in FIG. 5C, the first motor continues to be actuated and the funnel assembly descends further so as to be slightly above the open container for receiving the regolith sample therein.

Regolith is then introduced into the container **160,** and some excess regolith will be present as depicted in FIG. 5D.

As described above, the first motor **32** is then further actuated and the funnel assembly **100** descends further, so that clutch assembly **80** is engaged.

This excess regolith needs to be "swept off" from the container **160,** with a perspective view of of the system part-way through this process depicted in FIG. 5E.

The funnel **102** of the funnel assembly **100** is rotated outward and away from the open container by actuation of the second motor driving the clutch assembly **80** and the gear mechanism **60,** specifically by driving the funnel driving gear **72** via the gear mechanism **60** and engaged clutch assembly **80** as previously described. The excess regolith is deposited as depicted on the side(s) of the main housing **20.**

It would be appreciated that the skirt **104** in this operation remains in place on the top of the container **160** in order to protect the rims **166, 168** of the container from damage by small particles of regolith which could interfere with the effective sealing of the lid **140** with the container **160.**

It can be seen that at this point the lid **140** remains engaged with the arm assembly **50** and rotated out of the way of the sample collection process.

The funnel assembly **100** returns to the position depicted in FIG. 5F relative to the container **160** by operation of the second motor **62** via the funnel driving gear **72** and gear mechanism **60.**

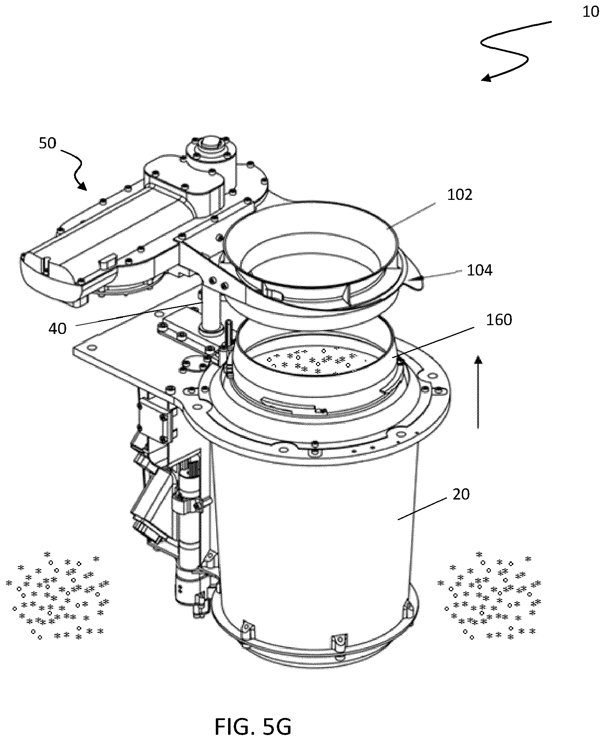

Turning now to FIG. 5G, actuation of the first motor **32** drives the elongate pin **34** in the driven sleeve to change the position of the funnel assembly **100** so that it is spaced away from the mouth of the container. The regolith contained in the sample container **164** is easily visible in this position. It can also be seen that there is no regolith contaminating the rim **166, 168** of the container.

The arm assembly **50** is rotated by the second motor **62** via the gear mechanism **60,** which rotates the funnel assembly out and away from being over the container **160** and such that the lid is positioned over the contained albeit vertically separated from the container.

Referring now to FIG. 6A, there is depicted an exemplary view of the robotic packaging system **10** of the present disclosure after the lid **140** has been moved into position above the open container **160** as described. This is part of the sealing process is step **260** depicted in FIG. 4A.

In this position, it could be seen that the lid **140** is spaced apart from the mouth of the container **160** which is retained in the main housing **20.**

Referring now to FIG. 6B, the robotic packaging system **10** has been removed for clarity. In the Figure depicted, only the lid **140** and the container **160** are visible, however in the state depicted in FIG. 6B the container **160** is still engaged with the base plate **24** of the main housing **20.** This engagement is mediated by the projection of the base plate locking teeth **26** into the ribs **174.**

In the representation shown in FIG. 6B, the teeth are engaged with the ribs **174** which prevents the container from being extracted or vibrated in the main housing **20.**

At this point, the lid **140** is resting on the lower rim **168** of the container **160** but the lid locking lugs **150** are not yet engaged with the projecting fingers **170** of the container **160.**

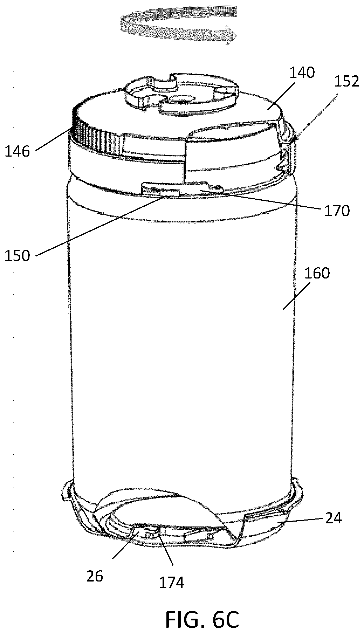

Referring now to FIG. 6C, it can be seen that the circumferential tooth portion **146** has been driven in the direction marked with the arrow, as compared to the representation of the container **160** depicted in FIG. 6B.

In this orientation, the projecting fingers **170** of the container **160** are urged underneath the locking lugs **150** of the lid and the gasket **152** is compressed between the container **160** and the inner surface of the lid **140.**

At this stage, the base plate locking teeth **26** are still engaged with the ribs **174** on the bottom of the container **160.**

It would be appreciated that in the state depicted the lid is engaged and locked and the container overall is still engaged with the main housing **20.**

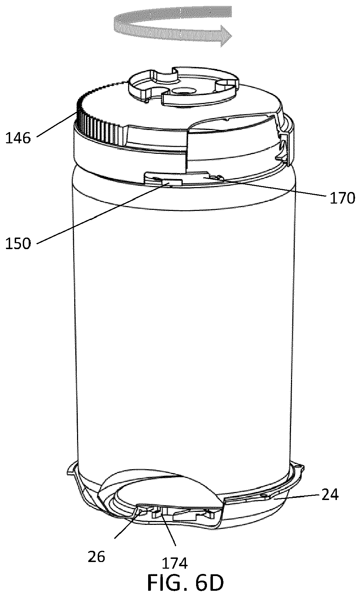

Referring now to FIG. 6D, the container is disengaged from the base plate **24** of the main housing **20** by further rotation.

In particular, upon further rotation of the circumferential tooth portion **146** driven by the external lid driving gear **72** (not shown), the base plate locking teeth **26** are driven out of engagement from the ribs **174** on the bottom of the container **160.**

Referring now to FIG. 7A, there is depicted an exemplary partial cross-sectional view of the container **160** and lid **140** in a sealed state, showing the inclusion of an optional sealing gasket **152.**

In particular, the top gripping portion **142** of the lid **140** can be seen in side cross-sectional view. The gasket **152** is compressed between the inside surface of the lid and the rim of the container **160.**

As depicted, it can be appreciated that the cross-section of the gasket **152** is in the general shape of a truncated triangle which facilitates engagement between the lid and the container.

Referring to FIG. 7B, there is depicted an exemplary perspective view of the gasket **152.**

Referring to FIG. 7C, a cross section of the gasket **152** in a truncated triangular cross section is also visible.

Referring now to FIG. 8A, the sample container **160** is positioned for disengagement from the housing **20** for extraction and eventual return to Earth for analysis.

In particular, the lid **140** is engaged with the container **160,** and the container **160** is disengaged from the main housing **20,** although resting within the cavity **22.** The first motor **32** drives the driven sleeve to a final fifth main height and the attached connection rod **40** interfaces with the clutch assembly. At this height, actuation of the second motor **62** drives rotation of the arm, which in turn rotates the funnel assembly **100** away from the sealed container.

The funnel **100** and arm assembly **50** are driven to the final position shown in FIG. 8B and the sealed container **160** which includes the locked lid **140** is available for extraction from the main housing **20.**

It would be appreciated that the robotic packaging system of the present disclosure is able to change between multiple operational states, yet only requires the inclusion of a first motor and a second motor. The use of a gear mechanism coupled with the second motor enables the second motor to drive rotation of the arm assembly (and therefore rotation of the lid/funnel assembly into and out from position). The gear mechanism is also coupled with an external lid driving gear which also enables the second motor to enable sealing engagement of the lid with the container and disengagement of the container and lid from the housing ready for collection. The gear mechanism finally also coupled with a funnel driving gear, which allows the funnel part of a funnel assembly to independently move relative to the skirt part of the funnel assembly, to easily and reliably remove excess regolith without contamination of container rim. Engagement of the funnel driving gear with the gear mechanism of the second motor is provided by adjusting the height of a clutch assembly via actuation of a first motor.

These components cooperating together are therefore able to fulfil all operational requirements and operation state transitions in a robust and reliable manner, and importantly, embodiments of the disclosure weigh no more 1.5 kg, of which the sample container weighs only 360g. Optionally, the inclusion of the sealing gasket provides for a very tight seal between the inclined surfaces of the container and corresponding inclined surfaces of the lid.

The overall mechanism is protected from vibration and other mechanical shock throughout the journey from the Earth to the moon or planet in the cavity of the housing through engagement with the base of the housing.

The embodied device has unique integrated packing and sealing mechanisms driven by two motors, a gear mechanism (including external lid driving gear and funnel driving gears) and a clutch mechanism, which is most suitable for planetary sample return operations in extreme environment and payload constraints.

The above embodiments are described by way of example only. Many variations are possible without departing from the scope of the disclosure as defined in the appended claims.

For clarity of explanation, in some instances the present technology may be presented as including individual functional blocks including functional blocks comprising devices, device components, steps or routines in a method embodied in software, or combinations of hardware and software.

Although a variety of examples and other information was used to explain aspects within the scope of the appended claims, no limitation of the claims should be implied based on particular features or arrangements in such examples, as one of ordinary skill would be able to use these examples to derive a wide variety of implementations. Further and although some subject matter may have been described in language specific to examples of structural features and/or method steps, it is to be understood that the subject matter defined in the appended claims is not necessarily limited to these described features or acts. For example, such functionality can be distributed differently or performed in components other than those identified herein. Rather, the described features and steps are disclosed as examples of components of systems and methods within the scope of the appended claims.

## Claims

1. A non-terrestrial regolith robotic sample packaging system comprising:
a main housing having an elevation assembly and enclosing a cavity for receiving a sample container therein, wherein said elevation assembly comprises a first motor rotatably coupled to an elongate pin, said elongate pin threadingly engaged with a driven sleeve for changing the height thereof,
an arm assembly attached to the driven sleeve, the arm assembly comprising
an arm housing enclosing a clutch assembly, connected with a gear mechanism driven by a second motor rotatably coupled thereto;
and an axle pin engageable with a lid for rotation thereabout, said axle pin extendable from the arm assembly,
a funnel assembly comprising a funnel, and a skirt, wherein a funnel driving gear of the gear mechanism is couplable via the clutch assembly to the second motor, for rotation of said funnel in a direction of towards and away from the cavity of the main housing independently of the skirt.

2. The non-terrestrial regolith robotic sample packaging system according to claim 1 wherein the main housing includes a base plate in the cavity having a plurality of teeth extending therefrom for securing a container therein, said teeth being engageable with corresponding apertures located in ribs protruding from the bottom of a sample container to be secured.

3. The non-terrestrial regolith robotic sample packaging system according to claim 1 wherein rotation of the elongate pin displaces the driven sleeve away from and in the direction of towards the main housing.

4. The non-terrestrial regolith robotic sample packaging system according to claim 3 wherein the displacement of the driven sleeve changes the clutch assembly between an engaged state and disengaged state.

5. The non-terrestrial regolith robotic sample packaging system according to claim 1 wherein the funnel driving gear is coupled to the second motor when the clutch assembly is engaged.

6. The non-terrestrial regolith robotic sample packaging system according to claim 1 wherein at least one gear of the gear mechanism projects externally of the arm housing so as to be engageable with a corresponding circumferential geared portion of a lid of the sample container.

7. The non-terrestrial regolith robotic sample packaging system according to claim 6 wherein actuation of the second motor rotates the lid of the sample container into engagement with the container via the least one gear of the gear mechanism projecting externally of the arm housing engageable with the circumferential geared portion of the lid of the sample container.

8. The non-terrestrial regolith robotic sample packaging system according to claim 6 further comprising a lid of the sample container releasably attached with the arm assembly via a central aperture for receiving the axle pin of the arm assembly.

9. The non-terrestrial regolith robotic sample packaging system according to claim 8 wherein the rotation of the sample lid urges a projecting finger on a rim of the container into engagement with one or more corresponding locking lugs of the lid.

10. The non-terrestrial regolith robotic sample packaging system according to claim 1 wherein the packaging system further comprises resiliently deformable projections extending into the cavity of the main housing.

11. The non-terrestrial regolith robotic sample packaging system according to claim 1 further comprising a sealing gasket for sealing engagement with a lid with the sample container.

12. The non-terrestrial regolith robotic sample packaging system according to claim 9 further comprising an inclined surface on the container body disposed for sealing engagement with the lid upon relative rotation thereof.

13. A sample container and lid for receiving and sealing sample regolith for use with the robotic packaging system of claim 1, comprising:
a container body having a sample receiving cavity, and a base with protruding ribs having apertures defined therein, wherein said apertures are configured for receiving corresponding projections of a housing of the robotic packaging system receiving the container;
a rotatable lid with at least a partial circumferential geared portion engageable with a corresponding gear of the robotic packaging system; and a central hole engageable with a corresponding axle pin of the robotic packaging system,
wherein the lid is configured so as to be rotatable via the at least partial circumferential geared portion about the axle pin into sealing engagement with the container body.

14. The sample container and lid according to claim 13 configured such that further rotation of the lid about the axle pin of the robotic packaging system disengages the apertures from the corresponding projections.

15. The sample container and lid according to claim 13 wherein rotation of the sample lid urges a projecting finger on a rim of the container into engagement with one or more corresponding locking lugs of the lid for sealing engagement of the container with the lid.
